# FASCICULE DE BREVET EUROPEEN

(11) **EP 3 620 297 B1**
(45) Date de publication et mention de la délivrance du brevet: **16.02.2022**
(21) Numéro de dépôt: 19185659.0
(22) Date de dépôt: 11.07.2019
(51) Int. Cl.: B32B 5/02, B32B 1/00, B32B 3/08, B32B 3/12, B32B 3/26, B32B 3/30, B64D 33/02

(54) **PANNEAU INSONORISANT AVEC UNE AME ALVEOLAIRE ET UN SYSTEME DE DEGIVRAGE**
SCHALLDÄMMENDE PLATTE MIT EINEM WABENKERN UND EINEM ENTEISUNGSSYSTEM
SOUNDPROOFING PANEL WITH A CELLULAR CORE AND A DE-ICING SYSTEM

(30) Priorité: 05.09.2018 FR 1857971
(43) Date de publication de la demande: 11.03.2020
(73) Titulaire: AIRBUS OPERATIONS (S.A.S.), 31060 Toulouse (FR)
(72) Inventeur: PORTE, Alain, 31060 Toulouse Cedex 9 (FR); LALANE, Jacques, 31060 Toulouse Cedex 9 (FR)
(74) Mandataire: Gicquel, Olivier Yves Gérard

(56) Documents cités:
- FR-A1- 2 898 868
- FR-A1- 2 928 625
- FR-A1- 2 934 566

## Description

### DOMAINE TECHNIQUE

La présente invention concerne un panneau insonorisant avec une âme alvéolaire et un système de dégivrage, une structure d'entrée d'air d'une nacelle d'aéronef comportant un tel panneau insonorisant, une nacelle comportant une telle structure d'entrée d'air et un aéronef comportant au moins une telle nacelle.

### ETAT DE LA TECHNIQUE ANTERIEURE

Les panneaux insonorisants sont employés dans de nombreux domaines techniques, notamment dans le domaine aéronautique.

Un turbomoteur d'aéronef comprend une nacelle dans laquelle est logée la motorisation. La nacelle qui prend une forme annulaire présente à l'avant une structure d'entrée d'air.

La structure d'entrée d'air comprend globalement une face intérieure et une face extérieure en contact avec l'air extérieur, tandis que la face intérieure délimite une veine qui constitue le canal de soufflante. La structure d'entrée d'air a notamment pour fonction d'assurer l'écoulement aérodynamique de l'air, d'une part, vers le canal de soufflante et, d'autre part, vers l'extérieur de la nacelle.

La structure d'entrée d'air comprend classiquement une lèvre d'entrée d'air, un cadre de renfort avant et un panneau acoustique.

La lèvre d'entrée d'air présente en section la forme d'un U ouvert vers l'arrière, elle forme l'enveloppe extérieure de la partie avant de la structure d'entrée d'air et elle assure le partage de l'air entre la partie qui pénètre dans le canal de soufflante et la partie qui s'écoule autour de la nacelle.

Le cadre de renfort avant présente également en section la forme d'un U ouvert vers l'arrière et il est placé à l'intérieur et à l'arrière de la lèvre d'entrée d'air. Le cadre de renfort avant assure la tenue mécanique de la partie avant de la nacelle et aide à en préserver la forme et le dimensionnement.

Le panneau acoustique forme l'enveloppe intérieure de la nacelle, en arrière de la lèvre d'entrée d'air, du côté du canal de soufflante. Le panneau acoustique constitue donc une partie de la face intérieure.

Le panneau acoustique présente une structure propre à atténuer les bruits produits par le moteur et notamment par la soufflante. Ce panneau acoustique est de type composite sandwich, et il intègre une âme alvéolaire entre une paroi intérieure et une paroi extérieure. La paroi intérieure délimite le canal de soufflante et prolonge la lèvre d'entrée d'air, tandis que la paroi extérieure est à l'intérieur de la structure d'entrée d'air mais orientée vers l'extérieur de la nacelle.

Le volume entre la lèvre d'entrée d'air et le cadre de renfort avant permet la circulation d'un flux d'air chaud qui assure le dégivrage de la lèvre d'entrée d'air.

Bien qu'une telle structure d'entrée d'air donne entière satisfaction lors de son utilisation, il est souhaitable de trouver une structure qui permette d'augmenter la plage des fréquences atténuées, et d'augmenter la surface dégivrée et insonorisante. Il est connu du brevet FR2928625 un panneau acoustique de nacelle comprenant un ensemble de dégivrage sous forme d'éléments résistifs posés sur la peau externe du panneau.

### EXPOSE DE L'INVENTION

Un objet de la présente invention est de proposer un panneau insonorisant qui assure une meilleure atténuation des bruits et un dégivrage.

A cet effet, est proposé un panneau insonorisant comportant :
- une peau intérieure traversée de trous et destinée à être orientée vers une veine dans laquelle s'écoule un fluide,
- un matelas chauffant constitué de barrettes qui sont fixées à la peau intérieure du côté opposé à la veine et qui sont orientées selon une première direction, où deux barrettes voisines sont distantes l'une de l'autre afin de laisser une fente entre elles,
- une semelle fixée aux barrettes du côté opposé à la peau intérieure, où la semelle comporte, du côté des barrettes, des rainures qui s'étendent selon une deuxième direction différente de la première direction et où la semelle présente entre deux rainures successives, une nervure,
- une âme alvéolaire fixée à la semelle du côté opposé aux barrettes, et
- un panneau extérieur fixé à l'âme alvéolaire du côté opposé à la semelle.

Un tel panneau insonorisant permet ainsi d'obtenir une surface dégivrée et une meilleure atténuation des bruits.

Avantageusement, les barrettes sont solidaires les unes des autres.

Avantageusement, la première direction et la deuxième direction sont perpendiculaires.

Avantageusement, l'épaisseur totale de la semelle au niveau des nervures est au moins de 4 mm.

Avantageusement, chaque barrette comporte un élément électriquement résistif qui chauffe lorsqu'un courant le traverse et un isolant électrique dans lequel est noyé l'élément résistif.

Avantageusement, chaque barrette est traversée par un tube dans lequel circule un fluide caloporteur chauffé.

Avantageusement, la peau intérieure est réalisée en un matériau conducteur thermique.

L'invention propose également une structure d'entrée d'air pour une nacelle d'un aéronef, ladite structure d'entrée d'air délimitant une veine et comportant une lèvre présentant une section en U orientée vers l'arrière et un premier panneau insonorisant selon l'une des variantes précédentes fixé à l'arrière de la lèvre et délimitant la veine.

Avantageusement, la structure d'entrée d'air comporte un deuxième panneau insonorisant fixé à l'arrière du premier panneau insonorisant et comportant une âme alvéolaire fixée entre une peau intérieure percée de trous et orientée vers la veine et un panneau extérieur orienté à l'opposé.

L'invention propose également une nacelle comportant à l'avant, une structure d'entrée d'air selon l'une des variantes précédentes.

L'invention propose également un aéronef comportant au moins une nacelle selon la variante précédente.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 montre une vue de côté d'un aéronef selon l'invention,
la Fig. 2 est une vue en coupe et de côté d'une structure d'entrée d'air selon l'invention,
la Fig. 3 est une vue éclatée en perspective d'un panneau insonorisant selon l'invention, et
la Fig. 4 est une vue en perspective d'un matelas chauffant selon une variante de réalisation.

### EXPOSE DETAILLE DE MODES DE REALISATION

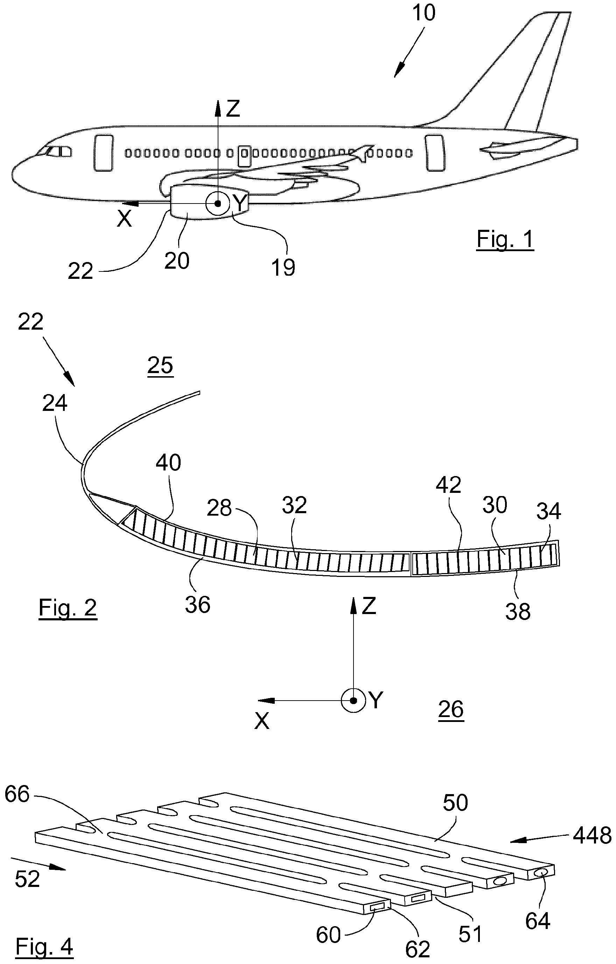

Dans la description qui suit, les termes relatifs à une position sont pris en référence à un aéronef en position d'avancement, c'est-à-dire comme il est représenté sur la Fig. 1.

La Fig. 1 montre un aéronef 10 qui comporte au moins un turbomoteur 20.

Dans toute la description qui va suivre, par convention, la direction X correspond à la direction longitudinale du turbomoteur 20, cette direction étant parallèle à l'axe longitudinal X du turbomoteur 20. D'autre part, la direction Y correspond à la direction orientée transversalement par rapport au turbomoteur 20, et la direction Z correspond à la direction verticale ou hauteur, ces trois directions X, Y, Z étant orthogonales entre elles.

Le turbomoteur 20 comporte classiquement une nacelle 19 qui comporte à l'avant une structure d'entrée d'air 22 comportant une lèvre qui délimite l'intérieur et l'extérieur de la nacelle 19. La lèvre se prolonge vers l'intérieur par une paroi intérieure qui s'étend autour d'une veine qui canalise l'air vers une motorisation qui comporte entre autres une soufflante.

La Fig. 2 montre une structure d'entrée d'air 22 qui comporte une lèvre 24 qui présente une section en U orientée vers l'arrière et qui prend globalement une forme annulaire. La structure d'entrée d'air 22 délimite une veine 26 qui canalise l'air vers la motorisation et en particulier vers la soufflante.

La lèvre 24 délimite l'extérieur 25 et l'intérieur 26 de la nacelle 19. L'intérieur 26 correspond à la veine 26.

Dans le mode de réalisation de l'invention présenté ici, la structure d'entrée d'air 22 comporte autour de la veine 26 un premier panneau insonorisant 28 et un deuxième panneau insonorisant 30 qui délimitent la veine 26. Le premier panneau insonorisant 28 est fixé à l'arrière de la lèvre 24 jusqu'au deuxième panneau insonorisant 30. Le deuxième panneau insonorisant 30 est fixé à l'arrière du premier panneau insonorisant 28.

Dans le cas de l'invention, le cadre de renfort a été supprimé et la structure d'entrée d'air 22 de l'invention est renforcée par la présence du premier panneau insonorisant 28 qui possède également des capacités structurelles.

Le deuxième panneau insonorisant 30 comporte une âme alvéolaire 34 qui est fixée entre une peau intérieure 38 orientée vers la veine 26 et un panneau extérieur 42 orienté à l'opposé. La peau intérieure 38 est percée de trous permettant aux ondes sonores de se propager dans l'âme 34 pour y être atténuées.

Le deuxième panneau insonorisant 30 est prévu pour atténuer les hautes fréquences qui s'étendent entre 1000 et 4000 Hz. A cette fin, la peau intérieure 38 du deuxième panneau insonorisant 30 présente une épaisseur de l'ordre de 0,9 à 2 mm et les trous 46 ont donc également une profondeur d'au moins 0,9 à 2 mm.

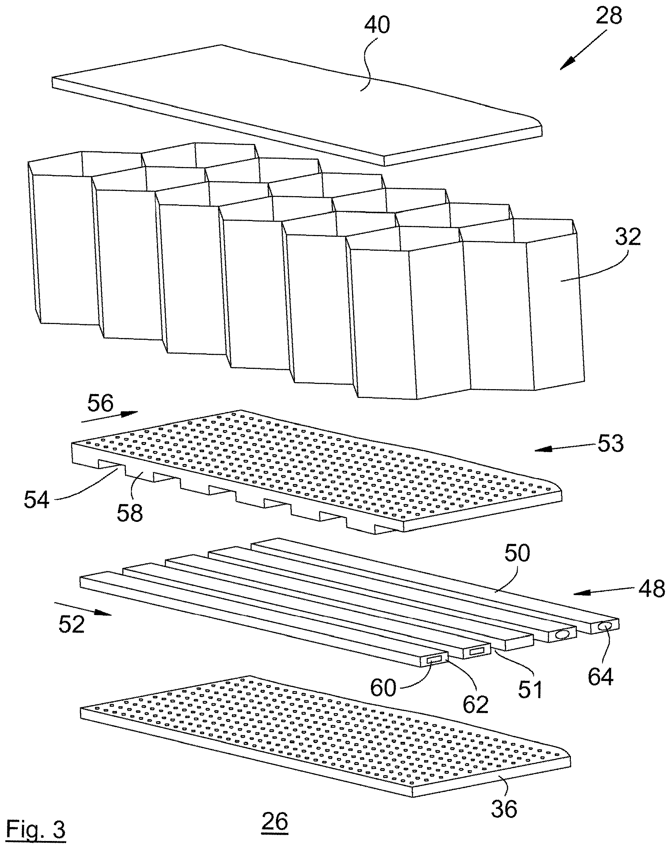

La Fig. 3 montre une vue éclatée du premier panneau insonorisant 28.

Le premier panneau insonorisant 28 comporte une peau intérieure 36 orientée vers la veine 26 et traversé de trous permettant aux ondes sonores de se propager à travers la peau intérieure 36. D'une manière générale, la peau intérieure 36 est destinée à être orientée vers une veine 26 dans laquelle s'écoule un fluide. La peau intérieure 36 peut être par exemple du type élément poreux comme un tissu poreux ou un treillis.

Le premier panneau insonorisant 28 comporte également un matelas chauffant 48 qui est constitué de barrettes 50 qui sont fixées à la peau intérieure 36 du côté opposé à la veine 26. Toutes les barrettes 50 sont orientées selon une première direction 52. Deux barrettes 50 voisines sont distantes l'une de l'autre afin de laisser une fente 51 entre elles. Les trous de la peau intérieure 36 débouchent dans ces fentes 51 qui permettent la progression des ondes sonores.

Le matelas chauffant 48 permet de dégivrer la face de la peau intérieure 36 qui est dans la veine 26.

Le premier panneau insonorisant 28 comporte également une semelle 53 qui est fixée aux barrettes 50 du côté opposé à la peau intérieure 36. La semelle 53 comporte, du côté des barrettes 50, des rainures 54 qui s'étendent selon une deuxième direction 56 différente de la première direction 52 et plus particulièrement perpendiculaire à la première direction 52. La semelle 53 présente ainsi entre deux rainures 54 successives, une nervure 58 parallèle à la deuxième direction 56. La semelle 53 repose ainsi sur les barrettes 50 par les nervures 58.

La semelle 53 est également traversée de trous qui permettent la progression des ondes sonores.

L'épaisseur totale de la semelle 53 au niveau des nervures 58 est de l'ordre de 0,9 mm à 5 mm et les profondeurs des trous qui traversent les nervures 58 sont donc également égales à 0,9 à 5 mm. L'épaisseur de la semelle 53 au niveau des rainures 54 est par exemple de l'ordre de 0,3 à 0,9 mm et les trous qui la traversent ont donc également une profondeur de 0,3 à 0,9 mm. Selon un mode de réalisation particulier, l'épaisseur totale de la semelle 53 au niveau des nervures 58 est au moins de 4 mm.

Le premier panneau insonorisant 28 comporte également une âme alvéolaire 32 qui est fixée à la semelle 53 du côté opposé aux barrettes 50.

Le premier panneau insonorisant 28 comporte également un panneau extérieur 40 qui est fixé à l'âme alvéolaire 32 du côté opposé à la semelle 53.

Une telle structure permet une meilleure atténuation des bruits car les ondes sonores vont se propager à travers la peau intérieure 36, les fentes 51, les rainures 54, la semelle 53 et enfin l'âme alvéolaire 32. La succession de trous de petits diamètres et d'espaces plus grands (les fentes 51 et les rainures 54) crée des variations qui ralentissent les ondes sonores et donc atténuent le bruit.

En outre, la présence des fentes 51 et des rainures 54 permet de conserver les trous libres même après l'assemblage et ainsi augmenter le pourcentage de surface ouverte.

Quand l'épaisseur est d'au moins 4 mm, la semelle 53 au niveau des nervures 58 permet d'atténuer les basses fréquences qui s'étendent entre 300 et 600 Hz. Les volumes des alvéoles de l'âme alvéolaire 32 dans lesquels débouchent les trous de la semelle 53 et les profondeurs de ces trous permettent de sélectionner la fréquence à atténuer. Par exemple, pour une profondeur de trou de 4 mm et une hauteur d'alvéole de 40 mm, les fréquences autour de 500 Hz sont atténuées.

L'atténuation des ondes sonores est donc étendue par rapport à l'état de la technique et la plage de fréquences atténuées est également étendue par l'utilisation de panneaux insonorisants basés sur deux technologies différentes.

La face de la peau intérieure 36 du premier panneau insonorisant 28 qui est orientée vers la veine 26 affleure la face de la peau intérieure 38 du deuxième panneau insonorisant 30 qui est orientée vers la veine 26 afin de réaliser une surface aérodynamique.

La peau intérieure 38 du deuxième panneau insonorisant 30 comporte également de préférence une source de chaleur qui est noyée dans la masse de ladite peau intérieure 38.

Chaque barrette 50 comporte par exemple un élément électriquement résistif 60 qui chauffe lorsqu'un courant le traverse et un isolant électrique 62 dans lequel est noyé l'élément résistif 60.

Chaque barrette 50 peut être traversée par un tube 64 dans lequel circule un fluide caloporteur chauffé comme par exemple de l'air chaud.

Afin de faciliter la propagation de la chaleur, la peau intérieure 36 est réalisée en un matériau conducteur thermique.

Il est possible de disposer un isolant thermique sur certains côtés des barrettes 50 afin de limiter la propagation de chaleur dans certaines directions. Il est également possible de disposer des conducteurs thermiques sur certains côtés des barrettes 50 afin de favoriser la propagation de chaleur dans certaines directions.

La Fig. 4 montre un matelas chauffant 448 selon un mode de réalisation particulier, dans lequel, afin de faciliter la manipulation du matelas chauffant 448, les barrettes 50 sont solidaires les unes des autres par exemple par des ponts 66 qui traversent les fentes 61. Le matelas chauffant 448 devient alors une plaque ajourée.

## Revendications

1. Panneau insonorisant (28) comportant :
- une peau intérieure (36) traversée de trous et destinée à être orientée vers une veine (26) dans laquelle s'écoule un fluide,
- un matelas chauffant (48, 448) constitué de barrettes (50) qui sont fixées à la peau intérieure (36) du côté opposé à la veine (26) et qui sont orientées selon une première direction (52), où deux barrettes (50) voisines sont distantes l'une de l'autre afin de laisser une fente (51) entre elles,
- une semelle (53) fixée aux barrettes (50) du côté opposé à la peau intérieure (36), où la semelle (53) comporte, du côté des barrettes (50), des rainures (54) qui s'étendent selon une deuxième direction (56) différente de la première direction (52) et où la semelle (53) présente entre deux rainures (54) successives, une nervure (58),
- une âme alvéolaire (32) fixée à la semelle (53) du côté opposé aux barrettes (50), et
- un panneau extérieur (40) fixé à l'âme alvéolaire (32) du côté opposé à la semelle (53).

2. Panneau insonorisant (28) selon la revendication 1, **caractérisé en ce que** les barrettes (50) sont solidaires les unes des autres.

3. Panneau insonorisant (28) selon l'une des revendications 1 ou 2, **caractérisé en ce que** la première direction (52) et la deuxième direction (56) sont perpendiculaires.

4. Panneau insonorisant (28) selon l'une des revendications 1 à 3, **caractérisé en ce que** l'épaisseur totale de la semelle (53) au niveau des nervures (58) est au moins de 4 mm.

5. Panneau insonorisant (28) selon l'une des revendications 1 à 4, **caractérisé en ce que** chaque barrette (50) comporte un élément électriquement résistif (60) qui chauffe lorsqu'un courant le traverse et un isolant électrique (62) dans lequel est noyé l'élément résistif (60).

6. Panneau insonorisant (28) selon l'une des revendications 1 à 4, **caractérisé en ce que** chaque barrette (50) est traversée par un tube (64) dans lequel circule un fluide caloporteur chauffé.

7. Panneau insonorisant (28) selon l'une des revendications précédentes, **caractérisé en ce que** la peau intérieure (36) est réalisée en un matériau conducteur thermique.

8. Structure d'entrée d'air (22) pour une nacelle (19) d'un aéronef (10), ladite structure d'entrée d'air (22) délimitant une veine (26) et comportant une lèvre (24) présentant une section en U orientée vers l'arrière et un premier panneau insonorisant (28) selon l'une des revendications précédentes fixé à l'arrière de la lèvre (24) et délimitant la veine (26).

9. Structure d'entrée d'air (22) selon la revendication précédente, **caractérisée en ce qu'**elle comporte un deuxième panneau insonorisant (30) fixé à l'arrière du premier panneau insonorisant (28) et comportant une âme alvéolaire (34) fixée entre une peau intérieure (38) percée de trous et orientée vers la veine (26) et un panneau extérieur (42) orienté à l'opposé.

10. Nacelle (19) comportant à l'avant, une structure d'entrée d'air (22) selon l'une des revendications 8 ou 9.

11. Aéronef (10) comportant au moins une nacelle selon la revendication précédente.

## Patentansprüche

1. Schalldämmende Platte (28) aufweisend:
- eine Innenhaut (36), durch die Löcher hindurchgehen und die dazu bestimmt ist, in Richtung eines Kanals (26) orientiert zu sein, in dem ein Fluid strömt,
- eine Heizmatte (48, 448) aus Leisten (50), die an der Innenhaut (36) auf der Seite gegenüber dem Kanal (26) befestigt sind und in einer ersten Richtung (52) orientiert sind, wobei zwei benachbarte Leisten (50) voneinander beabstandet sind, um einen Spalt (51) zwischen ihnen zu lassen,
- eine Sohle (53), die an den Leisten (50) auf der Seite gegenüber der Innenhaut (36) befestigt ist, wobei die Sohle (53) auf der Seite der Leisten (50) Nuten (54) aufweist, die sich in einer zweiten Richtung (56) erstrecken, die von der ersten Richtung (52) verschieden ist, und wobei die Sohle (53) zwischen zwei aufeinanderfolgenden Nuten (54) eine Rippe (58) aufweist,
- einen Wabenkern (32), der auf der Seite gegenüber den Leisten (50) an der Sohle (53) befestigt ist, und
- eine Außenplatte (40), die auf der Seite gegenüber der Sohle (53) am Wabenkern (32) befestigt ist.

2. Schalldämmende Platte (28) nach Anspruch 1, **dadurch gekennzeichnet, dass** die Leisten (50) miteinander fest verbunden sind.

3. Schalldämmende Platte (28) nach einem der Ansprüche 1 oder 2, **dadurch gekennzeichnet, dass** die erste Richtung (52) und die zweite Richtung (56) senkrecht zueinander sind.

4. Schalldämmende Platte (28) nach einem der Ansprüche 1 bis 3, **dadurch gekennzeichnet, dass** die Gesamtdicke der Sohle (53) an den Rippen (58) mindestens 4 mm beträgt.

5. Schalldämmende Platte (28) nach einem der Ansprüche 1 bis 4, **dadurch gekennzeichnet, dass** jede Leiste (50) ein elektrisches Widerstandselement (60), das sich erwärmt, wenn ein Strom durch es hindurchfließt, und einen elektrischen Isolator (62), in den das Widerstandselement (60) eingebettet ist, aufweist.

6. Schalldämmende Platte (28) nach einem der Ansprüche 1 bis 4, **dadurch gekennzeichnet, dass** durch jede Leiste (50) ein Rohr (64) hindurchgeht, in welchem ein erwärmtes Wärmeübertragungsfluid zirkuliert.

7. Schalldämmende Platte (28) nach einem der vorhergehenden Ansprüche, **dadurch gekennzeichnet, dass** die Innenhaut (36) aus einem wärmeleitenden Material hergestellt ist.

8. Lufteinlassstruktur (22) für eine Gondel (19) eines Luftfahrzeugs (10), wobei die Lufteinlassstruktur (22) einen Kanal (26) begrenzt und eine Lippe (24) mit einem U-förmigen Querschnitt, der nach hinten orientiert ist, und eine erste schalldämmende Platte (28) nach einem der vorhergehenden Ansprüche, die hinten an der Lippe (24) befestigt ist und den Kanal (26) begrenzt, aufweist.

9. Lufteinlassstruktur (22) nach dem vorhergehenden Anspruch, **dadurch gekennzeichnet, dass** sie eine zweite schalldämmende Platte (30) aufweist, die hinten an der ersten schalldämmenden Platte (28) befestigt ist und einen Wabenkern (34) aufweist, der zwischen einer Innenhaut (38), die mit Löchern versehen und in Richtung des Kanals (26) orientiert ist, und einer Außenplatte (42), die entgegengesetzt orientiert ist, befestigt ist.

10. Gondel (19), die vorne eine Lufteinlassstruktur (22) nach einem der Ansprüche 8 oder 9 aufweist.

11. Luftfahrzeug (10) aufweisend mindestens eine Gondel nach dem vorhergehenden Anspruch.

## Claims

1. Sound-absorbing panel (28) comprising:
- an inner skin (36) traversed by holes and intended to be oriented towards a channel (26) in which a fluid flows,
- a heating mat (48, 448) constituted by strips (50) which are fixed to the inner skin (36) on the side opposite to the channel (26) and which are oriented in a first direction (52), where two adjacent strips (50) are distant from each other in order to leave a slot (51) between them,
- a base (53) fixed to the strips (50) on the side opposite to the inner skin (36), where the base (53) comprises, on the strips (50) side, grooves (54) which extend in a second direction (56) different from the first direction (52) and where the base (53) has, between two successive grooves (54), a rib (58),
- a cellular core (32) fixed to the base (53) on the side opposite to the strips (50), and
- an outer panel (40) fixed to the cellular core (32) on the side opposite to the base (53).

2. Sound-absorbing panel (28) according to Claim 1, **characterized in that** the strips (50) are integral with each other.

3. Sound-absorbing panel (28) according to one of Claims 1 and 2, **characterized in that** the first direction (52) and the second direction (56) are perpendicular.

4. Sound-absorbing panel (28) according to one of Claims 1 to 3, **characterized in that** the total thickness of the base (53) at the level of the ribs (58) is at least 4 mm.

5. Sound-absorbing panel (28) according to one of Claims 1 to 4, **characterized in that** each strip (50) comprises an electrically resistive element (60) which heats up when a current passes through it and an electrical insulator (62) in which the resistive element (60) is embedded.

6. Sound-absorbing panel (28) according to one of Claims 1 to 4, **characterized in that** each strip (50) is traversed by a tube (64) in which a heated heat transfer fluid flows.

7. Sound-absorbing panel (28) according to one of the preceding claims, **characterized in that** the inner skin (36) is made from a heat conducting material.

8. Air intake structure (22) for a nacelle (19) of an aircraft (10), the said air intake structure (22) delimiting a channel (26) and comprising a lip (24) having a U-shaped cross section oriented towards the rear and a first sound-absorbing panel (28) according to one of the preceding claims fixed behind the lip (24) and delimiting the channel (26).

9. Air intake structure (22) according to the preceding claim, **characterized in that** it comprises a second sound-absorbing panel (30) fixed behind the first sound-absorbing panel (28) and comprising a cellular core (34) fixed between an inner skin (38) pierced with holes and oriented towards the channel (26) and an outer panel (42) oriented in the opposite direction.

10. Nacelle (19) comprising, at the front, an air intake structure (22) according to one of Claims 8 and 9.

11. Aircraft (10) comprising at least one nacelle according to the preceding claim.
